# EUROPEAN PATENT SPECIFICATION

(11) **EP 0 976 644 B1**
(45) Date of publication and mention of the grant of the patent: **17.09.2003**
(21) Application number: 99114523.6
(22) Date of filing: 23.07.1999
(51) Int. Cl.: B62D 21/15

(54) **Frontal collision protection device for a commercial vehicle**
Schutzvorrichtung bei Frontalaufprall für Lastkraftwagen
Dispositif de protection de choc frontal pour camions

(30) Priority: 28.07.1998 IT TO980655
(43) Date of publication of application: 02.02.2000
(73) Proprietor: IVECO FIAT S.p.A., 10156 Torino (IT)
(72) Inventor: Riva, Vittorio, 10100 Torino (IT)
(74) Representative: Cerbaro, Elena, Dr.

(56) References cited:
- DE-A- 3 827 923
- US-A- 3 751 093
- US-A- 4 358 152
- US-A- 5 727 827

## Description

The present invention relates to a frontal collision protection device for a commercial vehicle. Commercial vehicles are known which are provided with a frontal protection device, for so-called collision protection, designed to prevent in the event of frontal collision with another vehicle of lower height, particularly a motor car, that the latter vehicle can be deformed and become embedded under the cab.

Known collision protection devices essentially comprise a bar arranged transversely with respect to the vehicle, immediately behind the front bumper thereof, and means for connecting the bar itself to the chassis. The bar has geometrical and mechanical strength characteristics determined by international standards, intended to ensure that it collapses in a controlled manner following a frontal impact and absorbs at least partly the kinetic energy.

Collision protection devices are known, e.g. from DE-A-3 827 923, that discloses the features of the pre-amble of claim 1, in which said means for connecting the bar to the chassis are formed by struts extending rearwards and upwards from the bar itself so that they can be secured to the side members of the chassis. These struts are generally in the form of rods or beams, or else plates. In any case these struts occupy a significant amount of space in the lower front zone of the vehicle and, therefore, give rise to undesirable design constraints for the dimensions and installation of the parts of the vehicle which have to be accommodated in this zone, for example the radiator and the steering box.

The object of the present invention is devise a frontal collision protection device for a commercial vehicle, which makes it possible to overcome the above-mentioned. This object is achieved by the present invention in that it relates to a frontal collision protection device for a commercial vehicle, of the type comprising a bar having predetermined strength characteristics and designed to be fitted transversely to the vehicle behind a front bumper of the vehicle itself, and a pair of support structures for said bar adapted to connect the bar itself to a chassis of said vehicle, each of said support structures comprising anchoring means adapted to be rigidly connected to a respective side member of said chassis, characterised in that said support structures each comprise at least one support arm projecting laterally from said anchoring means towards the exterior of the vehicle, in a direction substantially orthogonal to said side member, and first and second connecting means interposed between said bar and said arm and defining at least a first and a second connection zone of the bar, which zones are situated respectively in the vicinity of said respective side member and of an end portion of said bar.

With a view to a better understanding of the present invention two preferred embodiments will be described non-restrictively by way of example below and with reference to the accompanying drawings, in which:
Figure 1 is a partial plan view of a collision protection device in accordance with a first embodiment of the present invention;
Figure 2 is a partial front view of the device in Figure 1;
Figure 3 is a section along the line III-III in Figure 1, on an enlarged scale;
Figure 4 is a section along the line IV-IV in Figure 1, on an enlarged scale;
Figure 5 illustrates a detail of Figure 3 in a different assembly configuration;
Figure 6 is a partial plan view of a collision protection device in accordance with a second embodiment of the present invention;
Figure 7 is a section along the line VII-VII in Figure 6, on an enlarged scale, and
Figure 8 is a front view, on an enlarged scale, of a detail of the device in Figure 6.

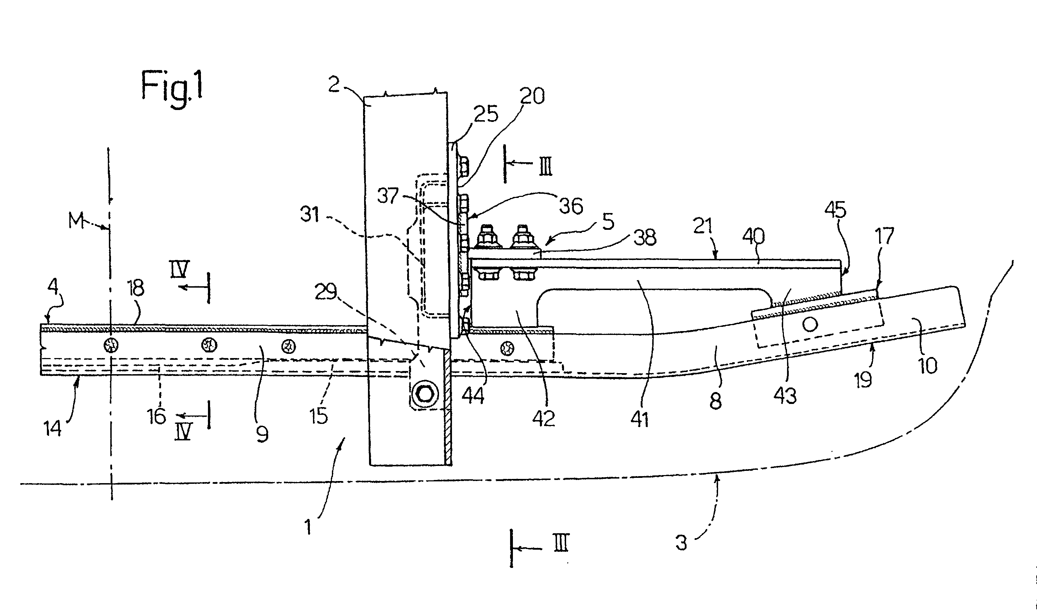

Referring now to Figures 1 to 3, the reference numeral 1 generally indicates a frontal collision protection device for a commercial vehicle, of which only the parts necessary for the invention to be understood are illustrated. In particular, the vehicle is provided with a conventional chassis, comprising in turn a pair of side members 2, only one of which is illustrated, it is being obvious that the other side member is symmetrical thereto with respect to a longitudinal median plane M of the vehicle. Furthermore, the vehicle is provided with a front bumper 3 which is attached to the chassis in a known manner and, therefore, not illustrated.

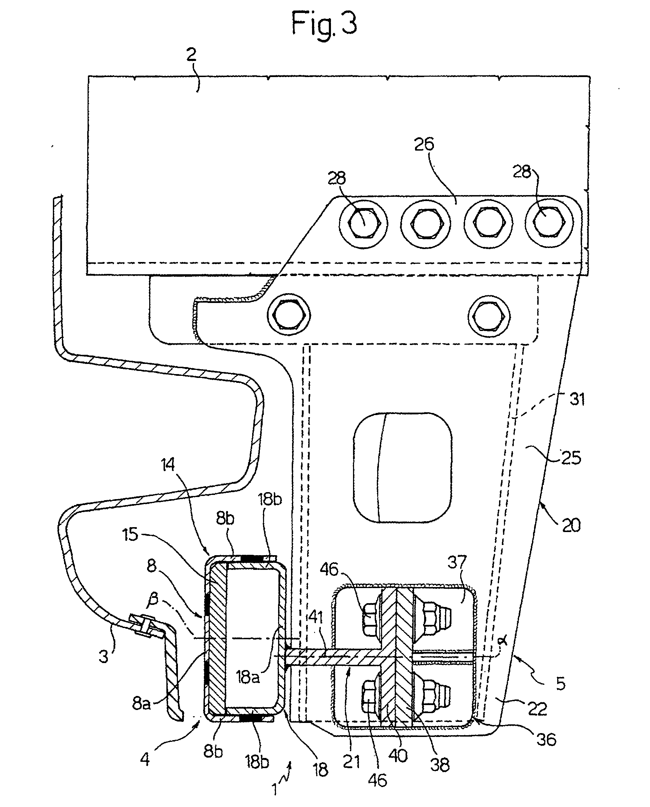

The device 1 essentially comprises a bar 4 extending transversely to the vehicle, immediately behind the front bumper 3 (Figures 1 and 3, and two support structures 5 (only one of which is illustrated) for connecting the bar 4 to the respective side members 2 of the vehicle.

The bar 4 (Figures 1 and 3) comprises a profile member 8 of rearwardly open C-shaped section, with a core 8a and two flanges 8b, which extends over the entire length of the bar 4 and has a central portion 9 which is substantially orthogonal to the longitudinal median plane M of the vehicle and a pair of end portions 10 which are bent slightly rearwards. The bar 4 further comprises a profile member 18 of C-shaped section open towards the front, with a core 18a and two flanges 18b, which extends substantially along the centre portion 9 of the profile member 8, inside the latter (Figure 3), and it is welded thereto, with the flanges 18a in contact with the respective flanges 8b of the profile member 8 so as to protrude rearwardly from the profile member 8 with the core 18a and to define with the profile member 8 itself a central box-type portion 14 of the bar 4 extending on either side of the vehicle beyond the respective side member 2.

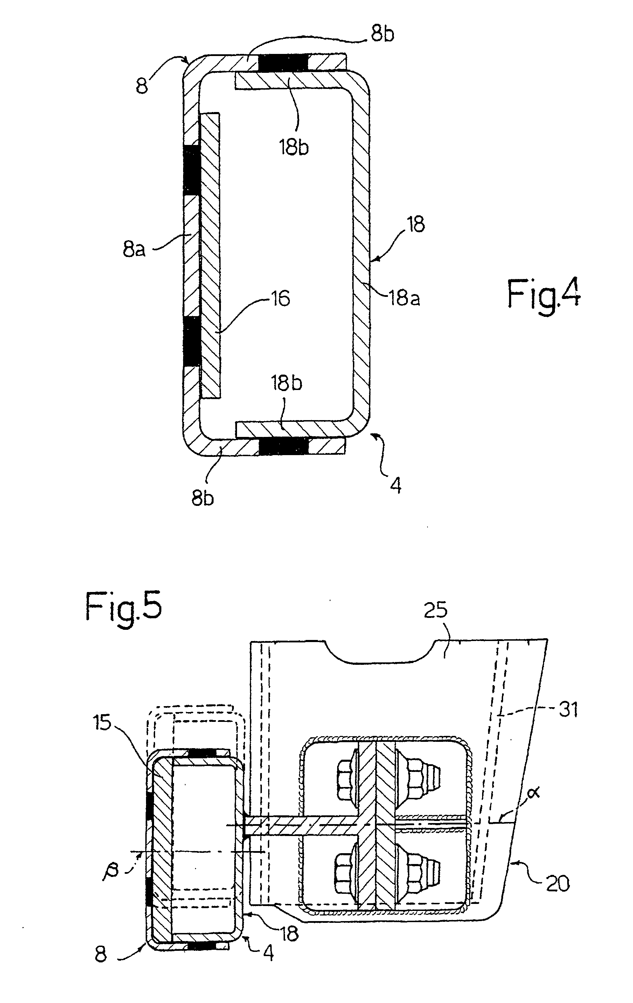

Reinforcing plates 15,16 are welded inside the core 8a of the profile member 8, along the central portion 14 of the bar 4. These plates are of differential thickness, greater in alignment with the side members (Figure 3) and smaller in alignment with the centre line of the vehicle (Figure 4), so as to impart predetermined mechanical strength properties to the bar 4 without increasing its weight excessively.

Finally, the bar 4 comprises a pair of reinforcing elements 17 (only one of which is illustrated) welded to the respective end portions 10 of the profile member 8. These elements 17 are formed by respective blank members of C-shaped section and they are welded to the inside of the profile member 8 in a completely analogous manner to that described for the profile member 18, so as to define respective lateral box-type portions 19 of the bar 4.

Each of the support structures 5 (Figure 3) essentially comprises a bracket 20 rigidly secured to a respective side member 2 and projecting downwards from the latter, and a support arm 21 secured to a lower end portion 22 of the bracket 20 and projecting laterally from the latter in a direction substantially orthogonal to the side member 2.

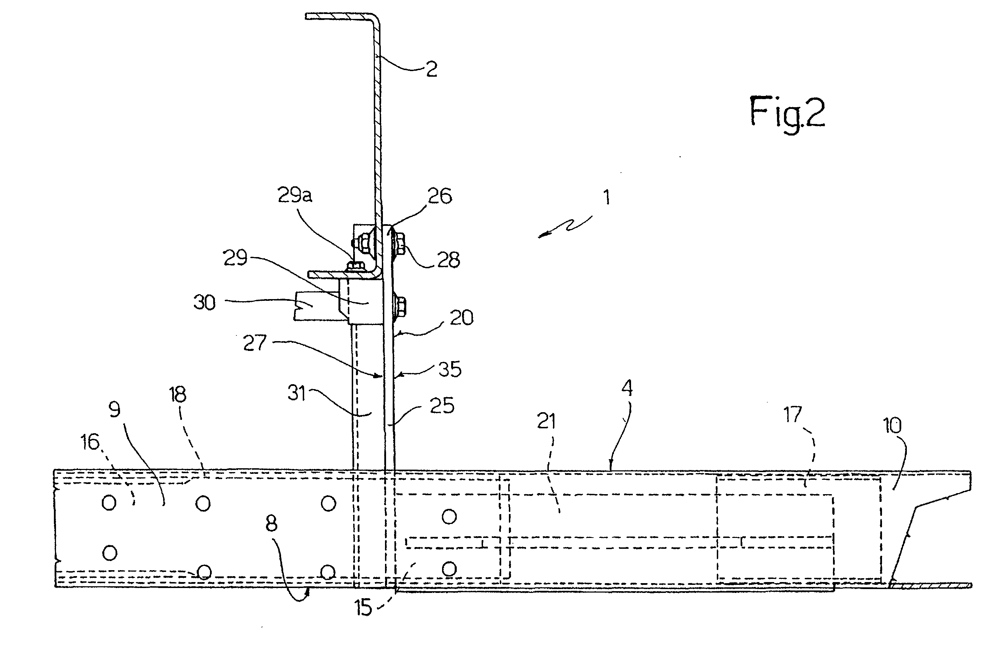

The bracket 20 is essentially formed by a plate 25 which is approximately trapezium shaped and which abuts with the upper edge 26 of one of its surfaces 27 against the side member 2 on the outer side thereof, and it is connected to there latter by a plurality of bolts 28 (Figure 3). The bracket 20 further comprises a reinforcing member 29, which is welded to the surface 27 in the vicinity of the edge 26, and abuts against the bottom of the side member 2, to which it is secured by means of respective screws 29a (Figure 2). The member 29 is in the form of a quadrangular bar elongated in the longitudinal direction with respect to the vehicle and, advantageously on its inner side, is provided with support elements 30 for the vehicle's radiator (not shown). Finally, the bracket 20 comprises a C-shaped stiffening element 31 which extends vertically along the surface 27 of the plate 25 below the member 29, with its cavity facing towards the plate 25 so as to form therewith a box-type structure. The element 31 is attached to the plate 25 and to the member 29 by welding.

A support bracket 36 for the arm 21 is welded to a surface 35 of the plate 25 opposite the surface 27, in the vicinity of a lower edge of the plate itself. The bracket 36 (Figure 3) is formed from a T-shaped blank member and comprises integrally a quadrangular base plate 37 which is welded to the plate 25, and an anchor plate 38 for the arm 21 extending so as to project from the plate 37 along a vertical plane orthogonal to the plate 37 itself.

The arm 21 is of T-shaped cross-section (Figure 3) and is symmetrical with respect to a horizontal plane α; more particularly, the arm 21 has a vertical web 40 of constant height and a horizontal wall 41 extending forwards from the web 40 along the plane α. The horizontal wall 41 forms a pair of front extensions 42,43 situated at the respective longitudinal ends 44,45 of the arm 21; the extensions 42,43 are welded at the end, along a free front edge thereof, respectively to the core 18a of the profile member 18, level with an end section of the profile member itself adapted to be arranged in operation in the vicinity of the respective side member 2 (Figure 1), and at the respective reinforcing element 17.

The end 44 of the arm 21 is connected to the plate 38 of the bracket 36 by means of a pair of bolts 46 (Figure 3) which are arranged symmetrically with respect to the plane α and which clamp the web 40 against the wall 38 itself.

Advantageously, the arm 21 is welded to the bar 4 in such a way that the plane α of symmetry of the arm is offset vertically with respect to a plane β of symmetry of the bar itself. In this way the bar 4 and the arms 21 form a preassembled unit which, as is evident from a comparison of Figures 3 and 5, can be assembled in two different positions turned through 180° with respect to one another about a longitudinal axis of the vehicle, thereby obtaining different vertical positions of the bar 4 with respect to the vehicle chassis, without changing each time the dimensions of the support structures 5. The possibility is thus given of using the same device 1, in particular the same brackets 20, for vehicles having chassis of different height with respect to the road surface, with substantially the same height of the bar 4 from the road surface, as imposed by standard constraints.

The mode of operation of the device 1 is known per se: in the event of a frontal impact of the vehicle the bar 4 and the associated support structures 5 are deformed plastically and collapse rearwards in a controlled manner. The energy of the impact is thus absorbed within certain limits and another vehicle or an obstacle of reduced height is prevented from being able to become embedded under the vehicle.

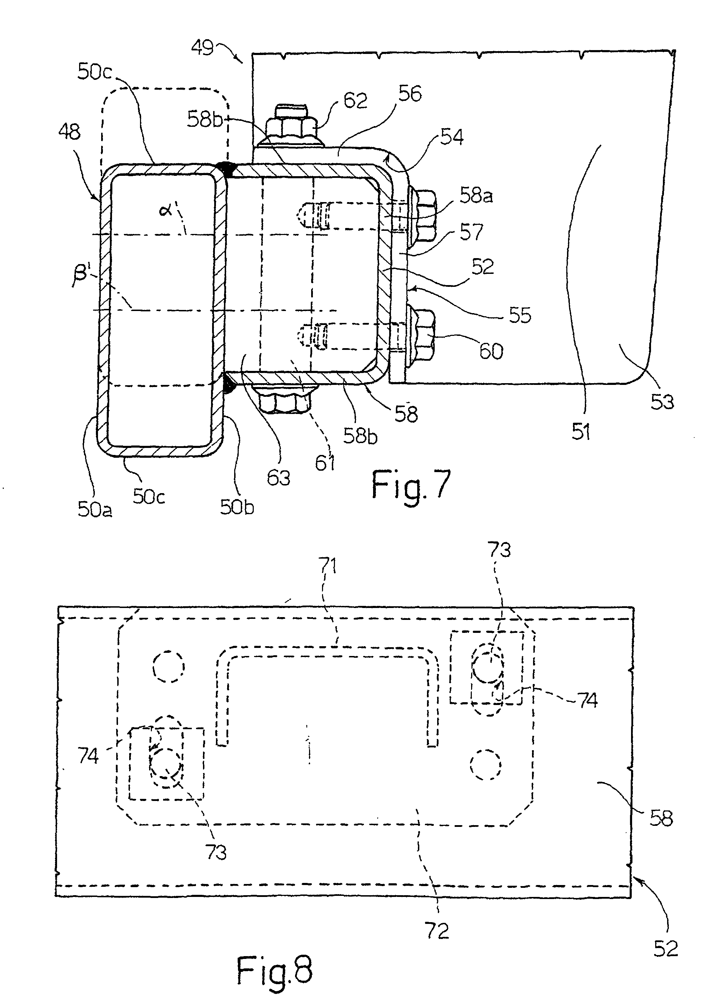

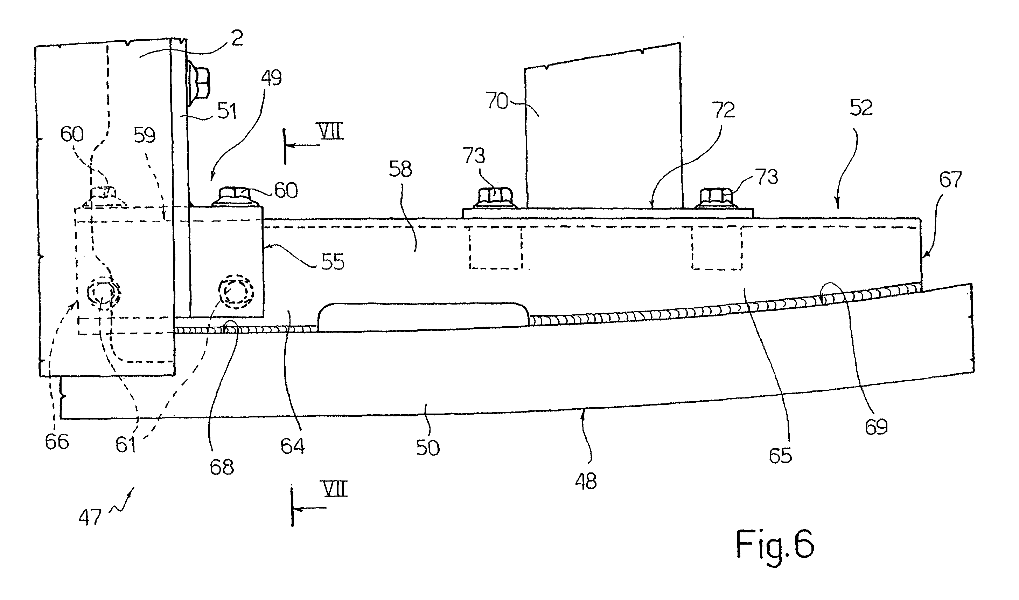

Referring now to Figure 6, the reference numeral 47 generally indicates a second embodiment of the frontal collision protection device for a commercial vehicle, of which only the parts necessary for the invention to be understood are illustrated.

Parts of the device 47 which are equivalent or correspond to parts of the device 1 already described are denoted with the same reference numeral in Figure 6 and will not be described in detail.

The device 47 comprises a bar 48 of box-type section similar to that of the bar 4 of the device 1 and extending transversely to the vehicle immediately behind the front bumper (not shown), and two support structures 49 (only one of which is illustrated) for connecting the bar 48 to the respective side members 2 of the vehicle (only one of which is illustrated).

The bar 48 (Figures 6 and 7) comprises a single profile member 50 of rectangular section defining a front wall 50a, a rear wall 50b and two horizontal walls 50c.

Each support structure 49 comprises a bracket 51 (partly illustrated) rigidly secured to a respective side member 2 in a manner which is wholly analogous to that described for the bracket 20, and a support arm 52 secured to a lower portion 53 of the bracket 51 and projecting laterally in a direction substantially orthogonal to the side member 2.

The lower portion 53 of the bracket 51 is substantially L-shaped and defines a seating 54, in which a bracket 55 is welded. The bracket 55 is formed from a blank profile member and comprises a horizontal plate 56 and a vertical plate 57 connected to one another.

The arm 52 comprises a profile member 58 of C-shaped section open towards the front and towards the bar 48, and which has a core 58a and two flanges 58b. The arm 52 is rigidly secured at its end part 59 to the bracket 55 in such a way that the profile member 58 is disposed symmetrically to a horizontal plane α'. In particular, the core 58a is fastened in contact with the vertical plate 57 by means of four screws 60 and the flanges 58b are secured to the horizontal plate 56 by means of a pair of bolts 61; more precisely, one of the flanges 58b is arranged in contact with the horizontal plate 56. Moreover, the arm 52 accommodates between the core 58a and the flanges 58b two reinforcing plates 63 which are disposed transversely to the profile member 58, which are each engaged by a respective pair of screws 60 and through which a respective bolt 61 passes transversely.

The flanges 58b form a pair of front extensions 64 and 65 situated at the respective ends 66 and 67 of the arm 52; the extensions 64 and 65 are welded at the end, along a free front edge thereof, on respective portions 68 and 69 of the rear wall 50b of the profile member 50.

Advantageously, the arm 52 is welded to the bar 48 in such a way that the plane α' of symmetry of the arm 52 is offset vertically with respect to a horizontal plane β' of symmetry of the bar 48 itself.

Finally, the arm 52 has an auxiliary reinforcing element 70 (Figures 6 and 8) of inverted U-section and projecting from the arm 52 in a direction substantially parallel to the side member 2 and on the opposite of the bar 48. The auxiliary reinforcing element 70 has a first end (not shown) which is rigidly secured to a part of the body of the commercial vehicle, for example to the step structure providing access to the driver's cab of the vehicle itself, and an opposite second end welded to a plate 72 which, in turn, is securely fastened to the core 58a of the profile member 58 by means of two screws 73; the screws 73 engage in respective slots 74 provided in the plate 72 so as to allow the auxiliary reinforcing element 70 a certain amount of freedom in vertical positioning.

Analogously to what has been stated with respect to the device 1, the bar 48 and the arms 52 of the device 47 form a preassembled unit which, as is evident from a study of Figure 7, can be assembled in two different positions turned through 180° with respect to one another about a longitudinal axis of the vehicle, thereby obtaining different vertical positions of the bar 48 with respect to the vehicle chassis, without changing each time the dimensions of the support structures 49. The possibility is thus given of using the same device 47, in particular the same brackets 51, for vehicles having chassis of different height with respect to the road surface, with substantially the same height of the bar 48 from the road surface, as imposed by standard constraints.

The mode of operation of the device 47 is known per se and, moreover, is entirely analogous to that described for the device 1.

The advantages which can be achieved with the present invention are apparent from a study of the features of the support devices 1 and 47.

Firstly, the arrangement of the arms 21 or 52 substantially orthogonal with respect to the side members of the vehicle is such that the space occupied by the respective device 1 or 47 and the resultant design constraints are reduced to a minimum.

Furthermore, the possibility of installing the bar 4 or 48 in two different arrangements so as to compensate for the different heights of the chassis from the ground makes it possible to achieve considerable economies of scale, since it is not necessary to produce support structures 5 or 49 of different dimensions for the various versions of the vehicle.

## Claims

1. A frontal collision protection device (1;47) for a commercial vehicle, of the type comprising a bar (4;48) having predetermined strength characteristics and designed to be fitted transversely to the vehicle behind a front bumper (3) of the vehicle itself, and a pair of support structures (5;49) for said bar (4;48) adapted to connect the bar (4;48) itself to a chassis of said vehicle, each of said support structures (5;49) comprising anchoring means (20;51) adapted to be rigidly connected to a respective side member (2) of said chassis, **characterised in that** said support structures (5;49) each comprise at least one support arm (21;52) extending laterally so as to project from said anchoring means (20;51) towards the exterior of the vehicle, in a direction substantially orthogonal to said side member (2), and first and second connecting means (42,43;64,65) interposed between said bar (4;48) and said arm (21;52) and defining at least a first and a second connection zone of the bar (4;48), which zones are situated respectively in the vicinity of said respective side member (2) and of an end portion (10;69) of said bar.

2. A device according to claim 1, **characterised in that** said bar (4;48) is of box-type section at least at the level of said connecting zones.

3. A device according to claim 1 or 2, **characterised in that** said support structures (5;49) each comprise a bracket (20;51) adapted to be secured to said respective side member (2) and to extend downwards from the latter, each arm (21;52) extending so as to project from a lower end portion of said respective bracket (20;51).

4. A device according to any one of the preceding claims, **characterised in that** said bar (4;48) and said arms (21;52) have respective horizontal planes of symmetry (α, β; α', β') which are mutually offset.

5. A device according to claim 4, **characterised in that** said arms (21;52) are secured to the bar (4;48) in such a way as to form therewith a preassembled unit adapted to be connected to said brackets (20;51) in two different positions turned through 180° relative to one another.

6. A device according to claim 4 or 5, **characterised in that** each of said arms (21) is of T-shaped section defined by a vertical web (40) and by a horizontal wall (41) extending forwards from the web (40) towards said bar (4) along said plane (α) of symmetry of said arm (21), said horizontal wall (41) forming a pair of forward extensions (42,43) at the respective longitudinal ends (44,45) of the arm (21), said extensions (42,43) being welded at the end to said bar (4).

7. A device according to claim 4 or 5, **characterised in that** each of said arms (52) is of C-shaped section open towards the front and towards the bar (48) with a core (58a) and two flanges (58b) having a pair of front extensions (64, 65) at the respective longitudinal ends (66,67) of the arm (52), said extensions (64,65) being welded at the end to said bar (48).

8. A device according to claims 1 to 5 or 7 **characterised by** comprising for each of said arms (52) an auxiliary reinforcing element (70) projecting from said arms (52) in a direction substantially parallel to said side members (2) and on the opposite of the bar (48) and the auxiliary reinforcing element (70) being secured with one end to said arm (52) and with the other end to a part of the body of the commercial vehicle.

## Patentansprüche

1. Einrichtung (1; 47) zum Schutz eines Nutzfahrzeugs vor einer frontalen Kollision, mit einer Stange (4; 48) mit vorbestimmten Festigkeitseigenschaften, die quer an dem Fahrzeug hinter einer vorderen Stoßstange (3) des Fahrzeugs anbringbar ist, und mit einem Paar von Stützstrukturen (4; 49) für die Stange (4; 48), um die Stange (4; 48) an einem Chassis des Fahrzeugs anzubringen, wobei jede der Stützstrukturen (5; 49) Ankermittel (20; 51) aufweist, die fest mit einem jeweiligen Seitenelement (2) des Chassis verbindbar sind, **dadurch gekennzeichnet, dass** die Stützstrukturen (5; 49) jeweils zumindest einen Stützarm (21; 52) aufweisen, der sich seitlich erstreckt, so dass er von dem Ankermittel (20; 51) in Richtung des Äußeren des Fahrzeugs hervorsteht, und zwar in einer Richtung, die im wesentlichen orthogonal zu dem Seitenelement (2) verläuft, und ein erstes und ein zweites Verbindungsmittel (42, 43; 64, 65), die zwischen der Stange (4; 48) und dem Arm (21; 52) angeordnet sind und zumindest eine erste und eine zweite Verbindungszone der Stange (4; 48) definieren, welche Zonen sich in der Nähe des jeweiligen Seitenelements (2) bzw. in der Nähe eines Endbereichs (10; 69) der Stange befinden.

2. Einrichtung nach Anspruch 1, **dadurch gekennzeichnet, dass** die Stange (4; 48) zumindest auf der Höhe der Verbindungszonen einen kastenartigen Querschnitt hat.

3. Einrichtung nach Anspruch 1 oder 2, **dadurch gekennzeichnet, dass** die Stützstrukturen (5; 49) jeweils eine Halterung (20; 51) aufweisen, die an dem jeweiligen Seitenelement (2) anbringbar ist und sich von dem Seitenelement (2) her abwärts erstrecken kann, wobei sich jeder Arm (21; 52) so erstreckt, dass er von einem unteren Endbereich der jeweiligen Halterung (20; 51) hervorsteht.

4. Einrichtung nach einem der vorangehenden Ansprüche, **dadurch gekennzeichnet, dass** die Stange (4; 48) und die Arme (21; 52) jeweils horizontale Symmetrieebenen (α, β; α', β') haben, die wechselseitig versetzt sind.

5. Einrichtung nach Anspruch 4, **dadurch gekennzeichnet, dass** die Arme (21; 52) an der Stange (4; 48) so angebracht sind, dass sie mit ihr eine vormontierte Einheit bilden, die mit den Halterungen (20; 51) in zwei unterschiedlichen Positionen verbindbar ist, die relativ zueinander um 180° verdreht sind.

6. Einrichtung nach Anspruch 4 oder 5, **dadurch gekennzeichnet, dass** jeder der Arme (21) einen T-förmigen Querschnitt hat, definiert durch einen vertikalen Steg (40) und eine horizontale Wand (41), die sich von dem Steg (40) aus vorwärts in Richtung der Stange (4) entlang der Symmetrieebene (α) des Arms (21) erstreckt, wobei die horizontale Wand (41) ein Paar von Vorwärtsverlängerungen (42, 43) an den jeweiligen Enden (44, 45) des Arms (21) in Längsrichtung bildet, welche Verlängerungen (42; 43) am Ende mit der Stange (4) verschweißt sind.

7. Einrichtung nach Anspruch 4 oder 5, **dadurch gekennzeichnet, dass** jeder der Arme (52) einen C-förmigen Querschnitt hat, der nach vorn und in Richtung der Stange (48) offen ist, mit einem Kern (58a) und zwei Flanschen (58b) mit einem Paar von vorderen Verlängerungen (64, 65) an den jeweiligen Enden (66, 67) des Arms (52) in Längsrichtung, welche Verlängerungen (64, 65) am Ende mit der Stange (48) verschweißt sind.

8. Einrichtung nach den Ansprüchen 1 bis 5 oder 7, **dadurch gekennzeichnet, dass** sie für jeden der Arme (52) ein zusätzliches Verstärkungselement (70) aufweist, das von den Armen (52) aus im wesentlichen parallel zu den Seitenelementen (2) hervorsteht, und zwar gegenüber der Stange (48), wobei das zusätzliche Verstärkungselement (70) mit einem Ende an dem Arm (52) befestigt ist und mit dem anderen Ende an einem Teil des Körpers des Nutzfahrzeugs.

## Revendications

1. Dispositif de protection de choc frontal (1 ; 47) pour camions, du type comprenant une barre (4; 48), ayant des caractéristiques de résistance prédéterminées et conçues pour s'adapter de manière transversale sur le véhicule derrière un pare-chocs avant (3) du véhicule lui-même, et une paire de structures de support (5 ; 49) pour que ladite barre (4 ; 48) soit adaptée pour raccorder la barre (4 ; 48) elle-même à un châssis dudit véhicule, chacune desdites structures de support (5 ; 49) comprenant des moyens d'ancrage (20 ; 51) adaptés pour être rigidement raccordés à un élément latéral respectif (2) dudit châssis, **caractérisé en ce que** lesdites structures de support (5 ; 49) comprennent chacune au moins un bras de support (21 ; 52) qui s'étend de manière latérale afin de se projeter à partir desdits moyens d'ancrage (20 ; 51) vers l'extérieur du véhicule, dans une direction sensiblement orthogonale audit élément latéral (2), et aux premier et second moyens de raccordement (42, 43 ; 64, 65) interposés entre ladite barre (4 ; 48) et ledit bras (21 ; 52) et définissant au moins une première et une seconde zone de raccordement de la barre (4 ; 48), dont les zones sont respectivement situées à proximité dudit élément latéral respectif (2) et d'une partie d'extrémité (10 ; 69) de ladite barre.

2. Dispositif selon la revendication 1, **caractérisé en ce que** ladite barre (4 ; 48) présente une section de type boîte au moins au niveau desdites zones de raccordement.

3. Dispositif selon la revendication 1 ou 2, **caractérisé en ce que** lesdites structures de support (5 ; 49) comprennent chacune une console (20 ; 51) adaptée pour être fixée audit élément latéral respectif (2) et pour s'étendre vers le bas à partir de ce dernier, chaque bras (21 ; 52) s'étendant afin de se projeter à partir d'une partie d'extrémité inférieure de ladite console respective (20 ; 51).

4. Dispositif selon l'une quelconque des revendications précédentes, **caractérisé en ce que** ladite barre (4 ; 48) et lesdits bras (21 ; 52) ont des plans de symétrie respectifs horizontaux (α, β, α', β') qui sont mutuellement désaxés.

5. Dispositif selon la revendication 4, **caractérisé en ce que** lesdits bras (21 ; 52) sont fixés à la barre (4 ; 48) de telle sorte qu'ils forment avec celle-ci une unité préassemblée adaptée pour être raccordée auxdites consoles (20 ; 51) dans deux positions différentes tournées à 180° l'une par rapport à l'autre.

6. Dispositif selon la revendication 4 ou 5, **caractérisé en ce que** chacun desdits bras (21) présente une section en forme de T définie par une bande verticale (40) et par une paroi horizontale (41) qui s'étend vers l'avant à partir de la bande (40) vers ladite barre (4) le long dudit plan de symétrie (a) dudit bras (21), ladite paroi horizontale (41) formant une paire d'extensions vers l'avant (42, 43) au niveau des extrémités longitudinales respectives (44, 45) du bras (21), lesdites extensions (42, 43) étant soudées à l'extrémité de ladite barre (4).

7. Dispositif selon la revendication 4 ou 5, **caractérisé en ce que** chacun desdits bras (52) présente une section en forme de C ouverte vers l'avant et vers la barre (48) avec un noyau (58a) et deux brides (58b) dotées d'une paire d'extensions avant (64, 65) aux extrémités longitudinales respectives (66, 67) du bras (52), lesdites extensions (64, 65) étant soudées à l'extrémité de ladite barre (48).

8. Dispositif selon les revendications 1 à 5 ou 7, **caractérisé en ce qu'**il comprend pour chacun desdits bras (52) un élément de renforcement auxiliaire (70) se projetant à partir desdits bras (52) dans une direction sensiblement parallèle auxdits éléments latéraux (2) et à l'opposé de la barre (48) et l'élément de renforcement auxiliaire (70) étant fixé avec une extrémité dit bras (52) et avec l'autre extrémité à une partie de la carrosserie du camion.
